# EUROPÄISCHE PATENTANMELDUNG

(11) **EP 4 376 265 A1**
(43) Veröffentlichungstag der Anmeldung: **29.05.2024**
(21) Anmeldenummer: 23205531.9
(22) Anmeldetag: 24.10.2023
(51) Int. Cl.: H02K 1/276, H02K 7/116

(54) **ANTRIEB FÜR EIN LEICHTES ELEKTROFAHRZEUG UND EIN LEICHTES ELEKTROFAHRZEUG**

(30) Priorität: 28.11.2022 DE 102022212724
(71) Anmelder: M.L. DriveSolutions GmbH, 13158 Berlin (DE)
(72) Erfinder: Laube, Falk, 13187 Berlin (DE); Marcic, André, 24146 Kiel (DE)
(74) Vertreter: Ullrich & Naumann PartG mbB

(57) **Zusammenfassung**

Ein Antrieb für ein leichtes Elektrofahrzeug, insbesondere ein eBike, mit einem PM-Elektromotor (15) und einem Getriebe, wobei der PM-Elektromotor (15) einen inneren Rotor (1) und einen äußeren Stator (16), vorzugsweise mit einer konzentrierten oder verteilten Wicklung, aufweist, wobei der innere Rotor (1) in Flusskonzentrationsanordnung, insbesondere im Speichendesign, angeordnete, vergrabene Permanentmagneten (3) aufweist, wobei zwischen den Permanentmagneten (3) Polelemente (2) angeordnet sind und wobei die Polelemente (2) durch Verbindungselemente (4, 5, 9, 10, 11) verbunden sind. Des Weiteren ist ein leichtes Elektrofahrzeug angegeben.

## Beschreibung

Die Erfindung betrifft einen Anrieb für ein leichtes Elektrofahrzeug.

Des Weiteren betrifft die Erfindung ein leichtes Elektrofahrzeug mit einem Antrieb.

PM-Elektromotoren sind seit Jahren aus der Praxis bekannt. Sie umfassen einen Rotor mit Permanentmagneten und einen Stator mit Elektromagneten. Durch Aufgeben einer Wechselstromspannung in die Elektromagnete des Stators wird ein wechselndes Magnetfeld erzeugt, das die Permanentmagneten des Rotors in Bewegung versetzt. Auf diese Weise kann sich der Rotor drehen. Dabei kann der Rotor entweder außen- (Außenläufer) oder innenliegend laufen (Innenläufer).

Insbesondere Elektromotoren für leichte Elektrofahrzeuge müssen ein hohes Verhältnis von Drehmoment zu Gewicht beziehungsweise Größe aufweisen. Es ist bekannt, dass durch die Verwendung von Seltenerdmagneten, beispielsweise Neodym-Eisen-Bor (NdFeB), hohe Drehmomente erzeugt werden können, unabhängig davon, ob der Rotor außen- oder innenliegend läuft. Zusätzlich können die Elektromotoren ein Getriebe aufweisen, um das Drehmoment zu erhöhen.

Generell ist bei den bekannten Antrieben für leichte Elektrofahrzeuge problematisch, dass diese kompliziert im Aufbau und somit teuer in der Herstellung sind. Auch besteht das Problem, dass zu Erzeugung eines ausreichend hohen Drehmomentes teure Bestandteile verbaut werden, beispielsweise Seltenerdmagnete.

Der vorliegenden Erfindung liegt daher die Aufgabe zugrunde, einen Antrieb für ein leichtes Elektrofahrzeug und ein leichtes Elektrofahrzeug derart auszugestalten und weiterzubilden, dass mit konstruktiv einfachen Mitteln und somit kostengünstig eine hohe Drehmomentausnutzung realisierbar ist.

Erfindungsgemäß wird die voranstehende Aufgabe durch die Merkmale des Anspruches 1 gelöst. Damit ist ein Antrieb für ein leichtes Elektrofahrzeug, insbesondere ein eBike, mit einem PM-Elektromotor und einem Getriebe angegeben, wobei der PM-Elektromotor einen inneren Rotor und einen äußeren Stator, vorzugsweise mit einer konzentrierten oder verteilten Wicklung, aufweist, wobei der innere Rotor in Flusskonzentrationsanordnung, insbesondere im Speichendesign, angeordnete, vergrabene Permanentmagneten aufweist, wobei zwischen den Permanentmagneten Polelemente angeordnet sind und wobei die Polelemente durch Verbindungselemente verbunden sind.

In Bezug auf das leichte Elektrofahrzeug wird die zugrundeliegende Aufgabe durch die Merkmale des nebengeordneten Anspruchs 15 gelöst. Damit ist ein leichtes Elektrofahrzeug, insbesondere ein eBike, umfassend einen Antrieb nach einem der Ansprüche 1 bis 14 angegeben.

In erfindungsgemäßer Weise ist erkannt worden, dass die zugrundeliegende Aufgabe in verblüffend einfacher Weise gelöst werden kann, indem an dem inneren Rotor vergrabene Permanentmagneten in Flusskonzentrationsanordnung, insbesondere in der sogenannten "Speichen-Anordnung" (Spoke-Design), angeordnet werden. Danach sind die Permanentmagnete senkrecht zur tangentialen Magnetisierungsrichtung angeordnet, d.h. die Permanentmagnete verlaufen hochkant im Rotor. Durch diese sog. Sammleranordnung wird mit einfachen konstruktiven Mitteln das Drehmoment des Elektromotors erhöht.

Der Begriff "Verbindungselement" bezeichnet im Rahmen dieser Offenbarung insbesondere den Bereich des inneren Rotors, der die Polelemente zwischen den Permanentmagneten miteinander verbindet. Insbesondere sind die Verbindungselemente an den inneren und/oder äußeren radialen Enden der Polelemente angeordnet, beispielsweise in Form von Verbindungsstegen oder Ringen. Es ist möglich, dass mehrere Verbindungselemente miteinander verbunden sind.

Der Begriff "Polelement" bezeichnet im Rahmen dieser Offenbarung den Bereich des inneren Rotors, der sich, im Querschnitt des inneren Rotors betrachtet, zwischen zwei Permanentmagneten befindet. Insbesondere grenzt ein Polelement an zwei Seiten an einen Permanentmagneten an. Zwischen den Polelementen sind sowohl die Permanentmagnete als auch die Verbindungselemente angeordnet.

Der Ausdruck "magnetisch nicht leitfähiges Material" bezeichnet im Rahmen dieser Offenbarung ein Material, welches keine oder nur sehr schwache ferromagnetische Eigenschaften aufweist, das heißt dessen relative Permeabilität µᵣ entsprechend klein ist, insbesondere kleiner als 10. Hierbei kann es sich beispielsweise um Kunststoff oder Edelstahl handeln.

Der Ausdruck "ferromagnetisches Material" bezeichnet im Rahmen dieser Offenbarung ein Material, welches magnetisch leitfähig ist, das heißt dessen relative Permeabilität µᵣ entsprechend hoch ist, insbesondere größer als 50. Hierbei kann es sich beispielsweise um Elektroblech oder einen ferromagnetischen Pulververbundwerkstoff handeln.

Der Ausdruck "leichtes Elektrofahrzeug" bezeichnet im Rahmen dieser Offenbarung ein Elektrofahrzeug, insbesondere Fahrzeuge zum Transport einer einzelnen Person, wobei eine Antriebseinheit des Elektrofahrzeugs elektrisch betrieben wird. Ein leichtes Elektrofahrzeug kann beispielsweise ein eBike, ein Pedelec, ein Cargobike, ein elektrischer Rollstuhl oder ein elektrischer Roller sein. Insbesondere kann ein leichtes Elektrofahrzeug einen Radnabenantrieb aufweisen.

Der Ausdruck "vergrabene Permanentmagnete" bezeichnet im Rahmen dieser Offenbarung Permanentmagnete des inneren Rotors, die nicht an einer Oberfläche des Rotors angeordnet sind, sondern zumindest weitestgehend von Polelementen bzw. von Verbindungselementen ggf. von axialen Endkappen umgeben sind. Insbesondere zeigt eine Haupterstreckungsachse eines Permanentmagneten, also diejenige Achse in der ein Permanentmagnet die größte Erstreckung aufweist, in Richtung der Mittelachse des inneren Rotors und ist somit annähernd senkrecht zur Oberfläche des Rotors. Die Magnetisierungsrichtung der Permanentmagnete ist senkrecht zur Haupterstreckungsachse also annähernd tangential.

Es ist denkbar, dass die Polelemente des inneren Rotors als eine Laminierung ausgebildet sind. Hierbei kann es sich insbesondere um ein Paket aus Rotorblechen oder Blechsegmenten handeln. Alternativ können die Polelemente aus ferromagnetischem Pulververbundwerkstoff hergestellt sein. In die Öffnungen zwischen den Polelementen können Permanentmagnete aufgenommen werden. Unabhängig von der tatsächlichen Realisierung der Polelemente kann mindestens eines der Polelemente einen Durchgang aufweisen. Vorteilhafterweise weisen die Polelemente miteinander fluchtende Durchgänge auf. Der Durchgang bzw. die Durchgänge kann bzw. können zur Aufnahme eines Befestigungselements dienen oder, beispielsweise mit einem Kunststoff, vergossen sein, wobei der Verguss als Befestigungselement dient.

In vorteilhafter Weise kann mindestens ein Verbindungselement, vorzugsweise alle Verbindungselemente, ein magnetisch nicht leitfähiges Material umfassen, insbesondere aus dem magnetisch nicht leitfähigem Material hergestellt sein. Die Verwendung von Verbindungselementen, die ein magnetisch nicht leitfähiges Material umfassen hat den Vorteil, dass der magnetische Widerstand derart erhöht werden kann, dass insbesondere bei Verwendung von Permanentmagnetmaterialien geringerer Energiedichte die Drehmomentausnutzung des Motors deutlich erhöht wird. Insbesondere wird der Streufluss über die Verbindungselemente drastisch reduziert, sodass mehr magnetischer Fluss zum Antrieb des Elektromotors genutzt werden kann.

Gemäß einer weiteren vorteilhaften Ausgestaltung können die Verbindungselemente aus einem ferromagnetischen Material hergestellt sein. Eine entsprechende Ausgestaltung hat den Vorteil, dass sich diese besonders einfach herstellen lässt, beispielsweise aus Rotorblechen, die miteinander laminiert werden. Auch ist es denkbar, dass die Verbindungselemente einteilig mit den Polelementen ausgestaltet sind, insbesondere aus Rotorblechen, die miteinander laminiert sind.

In vorteilhafter Weise kann der innere Rotor aus mehreren, miteinander laminierten, Rotorblechen ausgebildet sein, wobei an mindestens einem der Rotorbleche mindestens ein Verbindungselement nicht ausgebildet ist. Die Rotorbleche könnten dabei aus einem ferromagnetischen Material, beispielsweise Elektroblech, bestehen. Die Verbindungselemente beeinträchtigen die Wirksamkeit der Permanentmagneten, da sie magnetische Kurzschlüsse zwischen den Polen der Magnete erzeugen. Um den magnetischen Widerstand der Verbindungselemente zu maximieren und somit den Einfluss der magnetischen Kurzschlüsse zu minimieren, wird eine Sättigung der Verbindungselemente angestrebt. Um dies zu erreichen, könnten die Verbindungselemente möglichst lang und dünn ausgebildet sein. Um die Sättigung der Verbindungselemente weiter zu begünstigen ist es daher von Vorteil, nicht alle Verbindungselemente auszuführen, d.h. in einzelnen Rotorblechen des Rotorpaketes werden Verbindungselemente weggelassen. In besonders vorteilhafter Weise könnten in Umfangsrichtung gesehen nur jeder zweite Radialsteg (wellenseitig innen) und jeder zweite Tangentialsteg (luftspaltseitig außen) an jedem einzelnen Rotorblech ausgebildet sein. Dies ist insbesondere bei einer Herstellung der Rotorbleche durch ein Stanzverfahren von Vorteil, bei welchem die minimalen Stegbreiten für eine gestanzte Ausführung begrenzt sind. Bei Ausführung jedes Steges (geschlossene Struktur) sind die Stege zu breit um eine vollständige Sättigung der Stege zu erreichen. Durch die Ausführung nur jedes zweiten Steges und anschließendem Verdrehen der Bleche gegeneinander kann ein geschlossenes Blechpaket mit der halben magnetisch wirksamen Stegbereite realisiert werden, beispielsweise wäre bei 0.65mm realer Stegbreite nur 0.325mm magnetisch wirksam und die Stege sättigen ausreichend und ohne signifikanten Performanceverlust.

In weiter vorteilhafter Weise kann zumindest ein Verbindungselement oder können alle Verbindungselemente als Stege und/oder ringförmige Distanzelemente ausgebildet sein, die an einem radial inneren und/oder radial äußeren Ende der Permanentmagneten angeordnet sind. Die Verbindungselemente können in radialer und/oder in tangentialer Richtung angeordnet sein. Durch eine solche Ausgestaltung der Verbindungselemente können die Permanentmagnete und die Polelemente positioniert, fixiert und stabilisiert werden. Sofern die Verbindungselemente aus einem ferromagnetischen Material hergestellt sind, können die tangential und/oder radial angeordneten Stege möglichst lang und dünn ausgebildet eine, um eine Sättigung der Verbindungselemente zu erreichen. Eine entsprechende Problematik besteht bei Verbindungselementen, die aus einem magnetisch nicht leitfähigem Material hergestellt sind, nicht, so dass beispielsweise auch die Nutzung von Permanentmagneten mit geringerer Energiedichte, insbesondere Ferritmagneten, möglich ist.

In besonders vorteilhafter Weise können die Stege und/oder das ringförmige Distanzelement durch eine Kunststoffumspritzung hergestellt sein. Dadurch lässt sich mit geringem finanziellen Einsatz eine ausreichend stabile Konstruktion erzeugen. Dabei kann ein etwaiger Verguss in Durchgängen der Polelemente auch aus Kunststoff hergestellt sein. Auch ist es denkbar, dass der gesamte innere Rotor eine Kunststoffumspritzung aufweist.

Gemäß einer weiteren vorteilhaften Ausgestaltung können die Verbindungselemente durch axiale Endkappen ausgebildet sein. Diese axialen Endkappen sind in vorteilhafter Weise aus magnetisch nicht leitfähigem Material ausgebildet. Alternativ oder zusätzlich ist es denkbar, dass die axialen Endkappen die Verbindungselemente aufweisen.

Generell erfüllen die axialen Endkappen bzw. der Verguss die Aufgabe, die Verbindungselemente und Permanentmagnete zu halten, zu fixieren und zu stabilisieren sowie die mechanische Verbindung zur Rotorwelle und zum Getriebe herzustellen und die Stabilität des Rotors zu gewährleisten.

Gemäß einer bevorzugten Ausgestaltung kann das Getriebe ein einstufiges oder ein mehrstufiges Planetengetriebe sein. Ein Vorteil hiervon ist, dass mit geringem Bauraum ein hohes Übersetzungsverhältnis erreicht werden kann. Insbesondere bei einem mehrstufigen Planetengetriebe kann das Übersetzungsverhältnis weiter erhöht werden. Dabei kann ein äußerer Ring des Planetengetriebes oder ein Planetenträger fixiert sein. Bei einem fixierten Ring und einem Planetenträger, der mit einem Rad des Fahrzeugs verbunden ist, kann das Übersetzungsverhältnis weiter gesteigert werden.

Bei Verwendung von einem Planetengetriebe kann der innere Rotor an einer Sonne des Planetengetriebes fixiert sein. Insbesondere können die Permanentmagnete und/oder das Gehäuse mittels der Stege und/oder dem ringförmigen Distanzelement an einer Sonne des Planetengetriebes fixiert sein. Auf diese Weise kann das Planetengetriebe platzsparend in das Gehäuse integriert werden.

In weiter vorteilhafter Weise kann das Getriebe ein Übersetzungsverhältnis von 5 bis 13, beispielsweise von 6 bis 12, insbesondere von 8 bis 10, vorzugsweise von 9, aufweisen. Ein Vorteil hiervon ist, dass das niedrige Drehmoment des schnelllaufenden Rotors des Elektromotors auf ein hohes Drehmoment erhöht werden kann, sodass es auch bei Fahrzeugen mit größeren Raddurchmessern wie eBikes nutzbar ist.

Die Permanentmagnete können aus verschiedenen Materialien bestehen. Beispielsweise weisen die Permanentmagneten seltene Erden auf, insbesondere NdFeB oder SmCo. Die Permanentmagnete können als kunststoffgebundene Magneten ausgebildet sein. Auch ist es denkbar, dass die Permanentmagnete AINiCo aufweisen. Besonders vorteilhaft kann es sein, wenn es sich bei den Permanentmagneten um Ferritmagnete handelt. Dabei können die Permanentmagnete eine Remanenz geringer als 1,6 Tesla (NdFeB), insbesondere geringer als 1,0 Tesla, vorzugsweise geringer als 0,5 Tesla (Ferrit) aufweisen. Ein Vorteil hiervon ist, dass ein günstiger und gleichzeitig ausreichend starker Magnet zur Erzeugung des Magnetfeldes genutzt werden kann.

In vorteilhafter Weise können die Permanentmagnete in axialer Richtung und/oder in innerer radialer Richtung länger als die Polelemente sein, sodass die Permanentmagnete an einem oder beiden axialen Enden und/oder über das innere radiale Ende der Polelemente hinausragen. Dadurch wird der Streufluss reduziert und die Drehmomentausnutzung erhöht. Darüber hinaus können die Magnete an den axialen Enden durch die axialen Endkappen oder alternativ durch den Verguss besser positioniert, fixiert und gehalten werden.

An dem Elektromotor, insbesondere an dem inneren Rotor, kann eine Freilaufeinheit angeordnet sein. Ein Vorteil hiervon ist, dass Leerlaufverluste minimiert werden können, solange der Elektromotor kein Drehmoment bereitstellt. Bei Verzicht auf die Freilaufeinheit ist der Motor rückspeisefähig, das heißt es besteht die Möglichkeit zum regenerativen Bremsen. Ein Vorteil hiervon ist, dass ein Teil der beim Bremsen verlorenen Energie zurückgewonnen werden kann. Die Möglichkeit zum regenerativen Bremsen kann beispielsweise auch durch eine drehmomentsensible oder eine mechanisch abschaltbare Freilaufeinrichtung realisiert werden. Solange ein Drehmoment an dem Motor anliegt wird kein Freilauf ermöglicht und wenn kein Drehmoment anliegt, wird der Freilauf aktiviert.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen in schematischer Form
- Fig. 1: in einer schematischen, geschnittenen Darstellung, ein Ausführungsbeispiel eines inneren Rotors eines erfindungsgemäßen Antriebs,
- Fig. 2: in einer schematischen, geschnittenen Darstellung, ein weiteres Ausführungsbeispiel eines inneren Rotors eines erfindungsgemäßen Antriebs,
- Fig. 3: in einer schematischen, geschnittenen Darstellung, ein weiteres Ausführungsbeispiel eines inneren Rotors eines erfindungsgemäßen Antriebs,
- Fig. 4: in einer schematischen, geschnittenen Darstellung, ein weiteres Ausführungsbeispiel eines inneren Rotors eines erfindungsgemäßen Antriebs,
- Fig. 5: in einer schematischen, seitlichen 3D Darstellung, ein Ausführungsbeispiel eines inneren Rotors eines erfindungsgemäßen Antriebs,
- Fig. 6: in einer schematischen, seitlichen 3D Darstellung, eines weiteren Ausführungsbeispiels eines inneren Rotors eines erfindungsgemäßen Antriebs,
- Fig. 7: einen Elektromotor mit einem Planetengetriebe gemäß einer Ausführungsform der vorliegenden Erfindung,
- Fig. 8: einen Elektromotor mit einem Planetengetriebe gemäß einer weiteren Ausführungsform der vorliegenden Erfindung, und
- Fig. 9: in einer schematischen Darstellung eine Seitenansicht eines Ausführungsbeispiels eines Rotorbleches eines erfindungsgemäßen Antriebs.

In den Figuren werden gleiche Bauteile jeweils mit den gleichen Bezugszeichen versehen, wobei zur besseren Übersicht nicht zwangsweise jedes Bauteil immer mit einem Bezugszeichen gekennzeichnet ist.

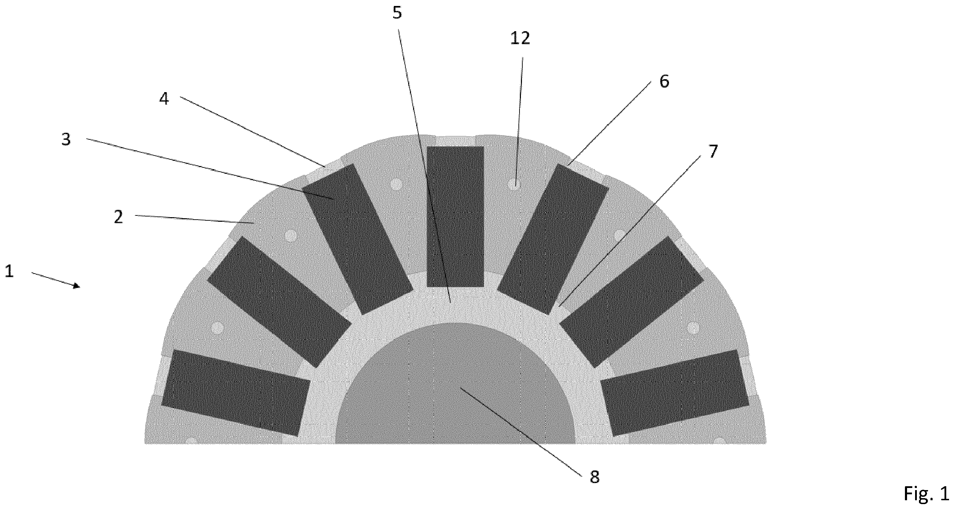

Fig. 1 zeigt in schematischer Darstellung einen inneren Rotor 1, wobei dieser als sogenannter offener Rotor 1 ausgebildet ist.

Der Rotor 1 eines PM-Elektromotors eines erfindungsgemäßen Antriebs weist einzelne Polelemente 2 aus ferromagnetischem Material auf. Des Weiteren sind mehrere Permanentmagneten 3 zwischen den Polelementen 2 und den Verbindungselementen 4, 5 in Flusskonzentrationsanordnung angeordnet und somit als vergrabene Permanentmagnete 3 ausgebildet. Im Konkreten sind die Verbindungselemente 4, 5 als tangential verlaufenen Stege 4 sowie als ringförmiges Distanzelement 5 bzw. Distanzring ausgebildet, die die Polelemente 2 miteinander verbinden. Das ringförmige Distanzelement 5 verbindet mehrere Polelemente 2 miteinander. Die Verbindungselemente 4, 5 können durch Kunststoffumspritzung hergestellt oder mit nicht dargestellten axialen Endkappen verbunden sein.

Die Verbindungselemente 4, 5 sind zur Vermeidung magnetischer Kurzschlüsse zwischen den Polelementen 2 aus einem magnetisch nicht leitfähigem Material hergestellt. Der PM-Elektromotor kann hierdurch ein höheres Drehmoment erzeugen, da ein höherer Anteil des Magnetfeldes der Permanentmagnete 3 durch den PM-Elektromotor genutzt werden kann. Somit können auch Permanentmagnete 3 mit einer geringen Remanenz, beispielsweise Ferritmagnete für den PM-Elektromotor genutzt werden, insbesondere selbst für Nabenmotoren für leichte Elektrofahrzeuge wie eBikes, die Elektromotoren mit einem hohen Verhältnis von Drehmoment zu Baugröße benötigen.

Die tangential verlaufenden Stege 4 sind an den äußeren radialen Enden 6 der Permanentmagnete 3 angeordnet. Innerhalb der Polelemente 2 können zusätzliche Durchgänge 12 eingelassen sein, die beispielsweise mit Stiften oder bei einer Umspritzung mit Kunststoff gefüllt sein können, um zur Erhöhung der Rotorstabilität beitragen zu können. Die Durchgänge 12 müssen jedoch nicht zwangsweise ausgebildet sein.

Das ringförmige Distanzelement 5 ist mit der Welle 8 des PM-Elektromotors verbunden. Es ist ebenfalls möglich, dass das ringförmige Distanzelement 5 stattdessen mit einer Rotorlagerung oder mit mechanischen Hilfselementen verbunden ist, die wiederum mit der Welle 8 verbunden sind.

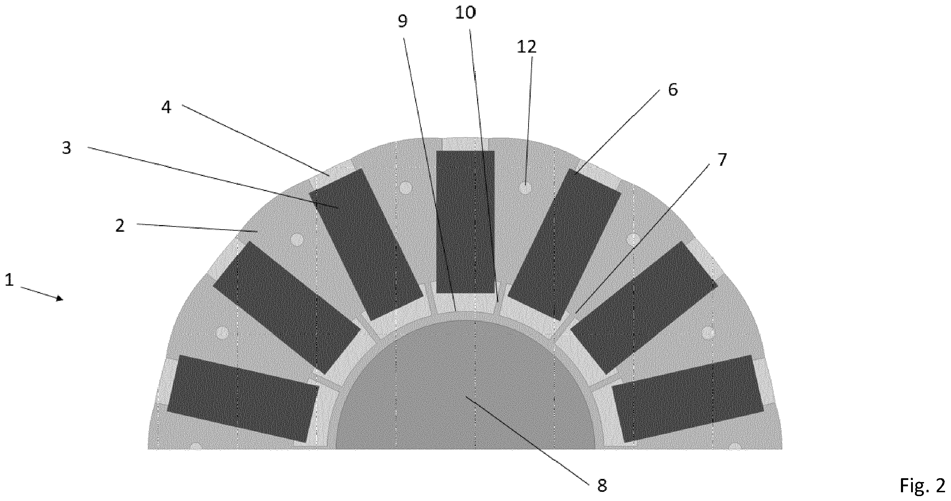

In Fig. 2 ist eine Konfiguration des inneren Rotors 1 in einer sogenannten halboffenen Variante gezeigt.

Im Gegensatz zu Figur 1 sind die Polelemente 2 an deren inneren radialen Enden 7 über radial verlaufende Stege 10 und ein ringförmiges Verbindungselement 9 miteinander verbunden, wobei die Stege 10 und das ringförmige Verbindungselement 9 aus einem ferromagnetischen Material hergestellt sind. Die Stege 4 und das ringförmige Distanzelement 5 sind aus einem magnetisch nicht leitfähigen Material hergestellt. Somit stellen die Polelemente 2 und die inneren Verbindungselemente 9, 10 ein halbgeschlossenes Blechpaket darstellen.

Zur Vermeidung von Wiederholungen wird des Weiteren auf die Beschreibung von Fig. 1 verwiesen, die analog für Fig. 2 gilt.

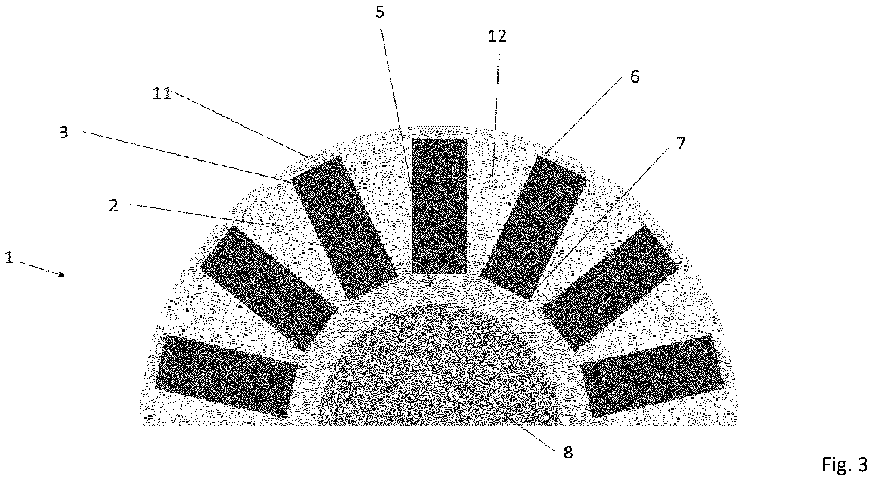

Fig. 3 zeigt eine weitere Konfiguration eines inneren Rotors 1 in einer sogenannten halboffenen Ausgestaltung.

Im Gegensatz zu Figur 1 sind die Polelemente 2 an deren äußeren radialen Enden über tangential verlaufende Stege 11 aus einem ferromagnetischen Material miteinander verbunden, so dass die Polelemente 2 und die Stege 11 ein halbgeschlossenes Blechpaket darstellen. Die Stege 4 und das ringförmige Distanzelement 5 sind aus einem magnetisch nicht leitfähigen Material hergestellt.

Zur Vermeidung von Wiederholungen wird des Weiteren auf die Beschreibung von Fig. 1 verwiesen, die analog für Fig. 3 gilt.

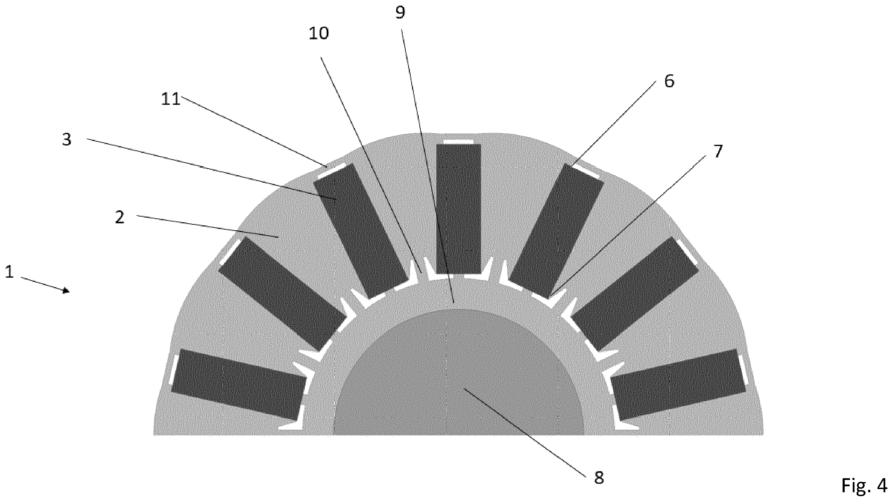

Fig. 4 zeigt eine Konfiguration des inneren Rotors 1 als sogenannte geschlossene Variante

Im Gegensatz zu Figur 1 sind die Polelemente 2 an den äußeren und den inneren radialen Enden 6, 7 über radial verlaufende Stege 10 und tangential verlaufende Stege 11 aus einem ferromagnetischen Material sowie über das innere Verbindungselemente 9 miteinander verbunden, sodass das komplette Rotorblechpaket als geschlossener Rotor 1 bezeichnet werden kann.

Die Ausführungsformen der Fig. 2 bis 4 stellen gegenüber der Ausführungsform gemäß Fig. 1 Kompromisse aus einfacherer Fertigbarkeit des Rotorpaketes, einfacherer Montierbarkeit des Rotors 1 (keine einzelnen Polelemente 2 und leichtere Positionierung der Permanentmagnete 2) sowie höherer Rotorfestigkeit auf der einen Seite und geringerer Drehmomentausnutzung aufgrund der magnetischen Kurzschlüsse über die Stege 10, 11 auf der anderen Seite dar.

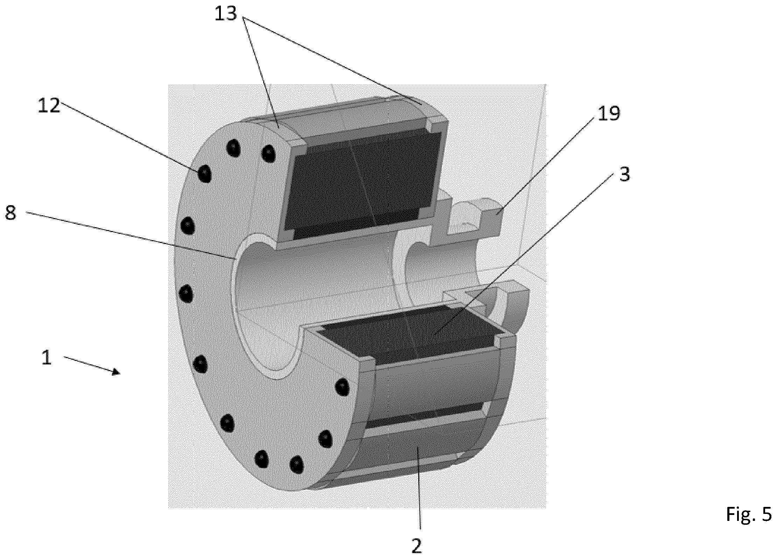

Fig. 5 zeigt eine Konfiguration eines Rotors 1 mit axialen Endkappen 13 in einer schematischen, seitlichen 3D Darstellung. Über die Durchgänge 12 in den axialen Endkappen 13 und in den nicht dargestellten Polelementen 2 sind die beiden axialen Endkappen 13 z.B. durch Schrauben, Nieten oder Stifte miteinander verbunden. Die axialen Endkappen 13 sind fest mit der Hohlwelle 8 verbunden. Die Hohlwelle 8 ist fest mit der Sonne 19 verbunden. Die Sonne 19 kann auch ein integraler Bestandteil der Welle 8 sein.

Die Permanentmagnete 3 weisen gegenüber den Polelementen 2 eine größere axiale Länge auf und ragen somit auf beiden axialen Enden über die Polelemente 2 hinaus.

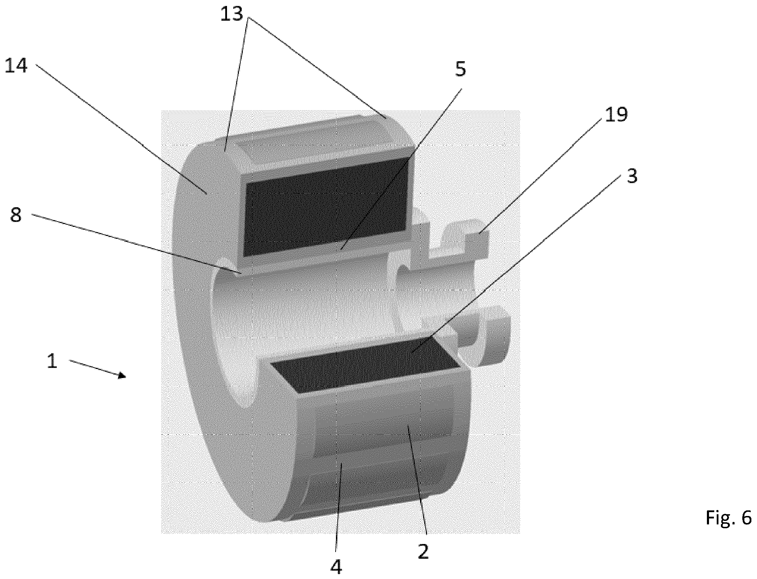

Fig. 6 zeigt eine Konfiguration eines Rotors 1 mit Kunststoffumspritzung 14 in einer schematischen seitlichen 3D Darstellung. Im Gegensatz zu Fig. 5 sind auch die axialen Endkappen 13 Bestandteil der Kunststoffumspritzung 14. Die Stege 4 und das ringförmige Distanzelement 5 sind ebenfalls Bestandteil der Kunststoffumspritzung 14. Die in Fig. 6 nicht dargestellten Durchgänge 12 können ebenfalls Bestandteil der Umspritzung sein. Damit weist der dargestellte Rotor 1 eine Kunststoffumspritzung 14 auf.

Die Hohlwelle 8 kann mit umspritzt werden und ist somit integraler Bestandteil des Rotors 1.

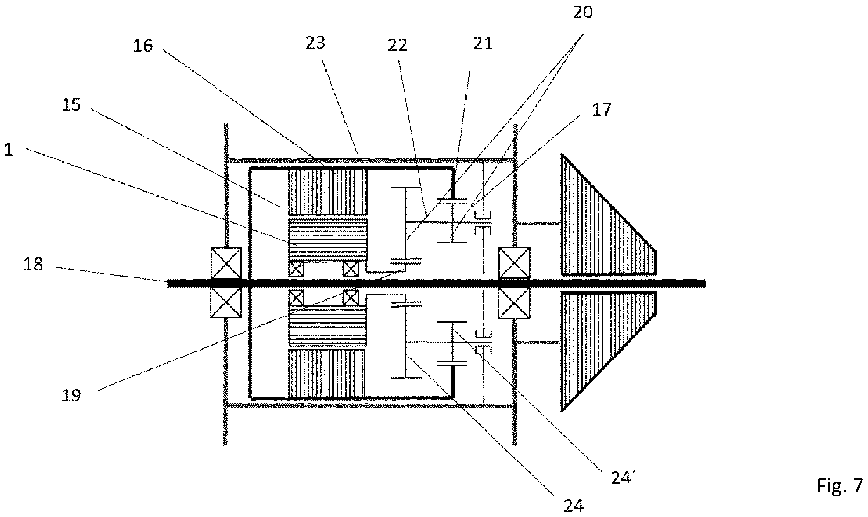

Fig. 7 zeigt einen als Nabenmotor ausgebildeten PM-Elektromotor 15 mit einem Planetengetriebe 17 gemäß einer Ausführungsform der vorliegenden Erfindung.

Der PM-Elektromotor 15 umfasst einen Rotor 1 und einen Stator 16. Der Rotor 1 ist drehbar auf der feststehenden Achse 18 gelagert und mit der Sonne 19 verbunden. Die Planeten 20 stehen im Zahneingriff mit der Sonne 19 und dem Hohlrad 21, wobei das Hohlrad 21 fest mit dem Stator 16 verbunden ist und sich nicht dreht. Der Planetenträger 22 ist mit den Planeten 20 und der Radnabe 23 verbunden und dreht sich mit einer reduzierten Geschwindigkeit.

Der Rotor 1 ist vorzugsweise gemäß einer der Ausführungsformen gemäß den Figuren 1 bis 6 ausgebildet. Somit kann der PM-Elektromotor 15 ein hohes Drehmoment bereitstellen und gleichzeitig eine kompakte Bauweise aufweisen, selbst wenn die Permanentmagnete 3 des Rotors 1 aus Magnetmaterial mit gegenüber NdFeB geringerer Energiedichte bestehen, wie sich dies beispielsweise bei eine Ausführungsform gemäß den Fig. 1 bis 3 eignet. Insbesondere leichte Elektrofahrzeuge mit großen Raddurchmessern, beispielsweise eBikes, benötigen jedoch noch höhere Drehmomente. Deswegen wird ein Planetengetriebe 17 genutzt, um das Drehmoment weiter zu erhöhen. Ein Planetengetriebe 17 benötigt lediglich ein geringes Bauvolumen, sodass das Planetengetriebe 17 in Kombination mit dem PM-Elektromotor 15 in einer Radnabe eines Elektrofahrzeugs angeordnet werden kann.

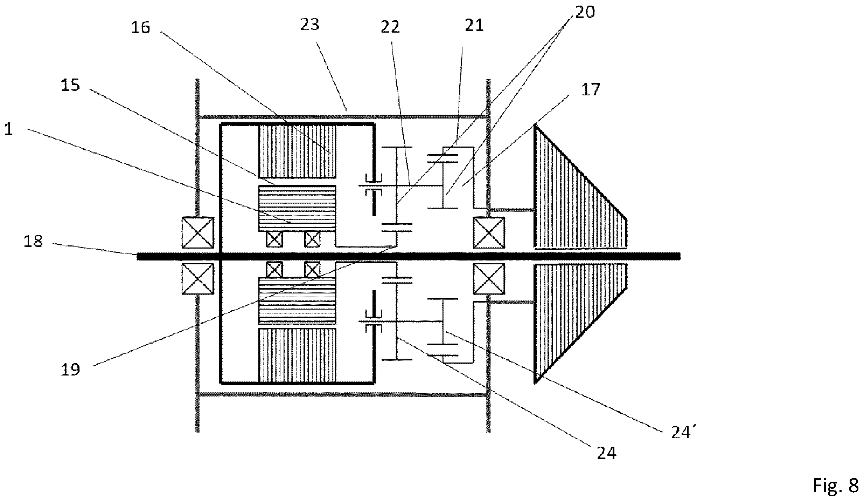

Figur 8 zeigt ebenfalls einen Nabenmotor. Im Gegensatz zu Figur 7 ist der Planetenträger 22 fest mit dem Stator 16 verbunden und dreht sich somit nicht. Stattdessen ist das Hohlrad 21 mit der Radnabe 23 verbunden, sodass sich das Hohlrad 21 mit der reduzierten Geschwindigkeit dreht.

Das Planetengetriebe 17 ist vorzugsweise als Compoundgetriebe, also zweistufig ausgeführt, wobei die Planeten zwei miteinander verbundene Zahnräder 24, 24' umfassen, die jeweils eine unterschiedliche Zähnezahl aufweisen. Dabei steht das Zahnrad mit der größeren Zähnezahl 24 im Zahneingriff mit der Sonne 19 und das Zahnrad mit der kleineren Zähnezahl 24' steht im Zahneingriff mit dem Hohlrad 21. Hierdurch wird ein hohes Übersetzungsverhältnis ermöglicht.

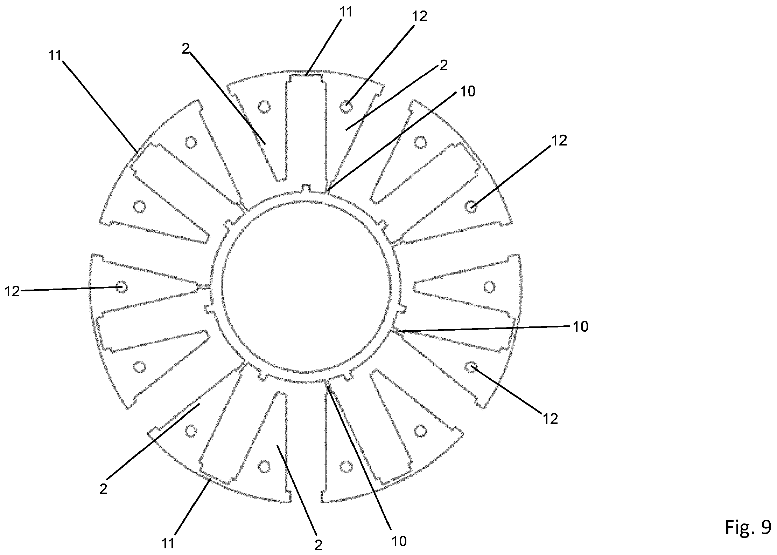

Fig. 9 zeigt in einer schematischen Darstellung eine Seitenansicht eines Ausführungsbeispiels eines Rotorbleches eines erfindungsgemäßen Antriebs. Das Rotorblech ist insbesondere für einen Antrieb geeignet, bei welchem die Permanentmagnete 3 als Ferritmagnete ausgebildet sind.

An dem Rotorblech sind gegenüber einer geschlossenen Ausgestaltung in Umfangsrichtung gesehen jeweils nur jeder zweite Radialsteg 10 und jeder zweite Tangentialsteg 11 ausgebildet. Zur Herstellung des inneren Rotors 1 können mehrere entsprechend Fig. 9 ausgebildete Rotorbleche miteinander verbunden bzw. laminiert werden, wobei die Rotorbleche jeweils derart gegeneinander verdreht angeordnet sind, dass von benachbarten Rotorblechen kein Tangentialsteg und kein Radialsteg aufeinander angeordnet sind. Dadurch wird ein geschlossenes Rotorblechpaket erzeugt, das gegenüber einem Rotorblechpaket, bei welchem jeder Tangential- und Radialsteg 10, 11 ausgebildet ist, die halbe magnetisch wirksamen Stegbereite aufweist. Beispielsweise wäre bei einer realen Stegbreite von 0.65 mm nur 0.325 mm magnetisch wirksam und die Radial- und Tangentialstege 10, 11 sättigen ausreichend und ohne signifikanten Performanceverlust. Bei Ausführung jedes Steges (geschlossene Struktur) wären die Radial- und Tangentialstege 10, 11 mitunter zu breit um eine vollständige Sättigung zu erreichen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: innerer Rotor
- 2: Polelement
- 3: Permanentmagnet
- 4: Stege (Verbindungselemente)
- 5: ringförmiges Distanzelement (Verbindungselement)
- 6: äußeres radiales Ende
- 7: inneres radiales Ende
- 8: Welle oder Lageraußenring
- 9: inneres ringförmiges Distanzelement (Verbindungselement)
- 10: Steg (radial)
- 11: Steg (tangential)
- 12: Durchgang
- 13: Axiale Endkappen
- 14: Kunststoffumspritzung
- 15: PM-Elektromotor
- 16: Stator
- 17: Planetengetriebe
- 18: Achse
- 19: Sonne
- 20: Planeten
- 21: Hohlrad
- 22: Planetenträger
- 23: Radnabe
- 24, 24': Planeten

## Patentansprüche

1. Antrieb für ein leichtes Elektrofahrzeug, insbesondere ein eBike, mit einem PM-Elektromotor (15) und einem Getriebe, wobei der PM-Elektromotor (15) einen inneren Rotor (1) und einen äußeren Stator (16), vorzugsweise mit einer konzentrierten oder verteilten Wicklung, aufweist,
wobei der innere Rotor (1) in Flusskonzentrationsanordnung, insbesondere im Speichendesign, angeordnete, vergrabene Permanentmagneten (3) aufweist, wobei zwischen den Permanentmagneten (3) Polelemente (2) angeordnet sind und wobei die Polelemente (2) durch Verbindungselemente (4, 5, 9) verbunden sind.

2. Antrieb nach Anspruch 1, **dadurch gekennzeichnet, dass** mindestens ein Verbindungselement (4, 5, 9, 10, 11), vorzugsweise alle Verbindungselemente (4, 5, 9,10,11), ein magnetisch nicht leitfähiges Material umfasst, insbesondere aus einem magnetisch nicht leitfähigem Material hergestellt ist, oder
dass alle Verbindungselemente (5, 9, 10, 11) aus einem ferromagnetischen Material hergestellt sind.

3. Antrieb nach Anspruch 1 oder 2, **dadurch gekennzeichnet, dass** der innere Rotor (1) aus mehreren, miteinander laminierten, Rotorblechen ausgebildet ist, wobei an mindestens einem der Rotorbleche mindestens ein Verbindungselement (9, 10, 11) nicht ausgebildet ist.

4. Antrieb nach einem der Ansprüche 1 bis 3, **dadurch gekennzeichnet, dass** zumindest ein Verbindungselement (4, 5, 9, 10, 11) oder alle Verbindungselemente (4, 5, 9, 10, 11) als Stege (4, 11) und/oder ringförmige Distanzelemente (5, 9) ausgebildet sind, die an einem radial inneren (7) und/oder radial äußeren Ende (6) der Permanentmagneten (3) angeordnet sind.

5. Antrieb nach Anspruch 4, **dadurch gekennzeichnet, dass** die Stege (4) und/oder das ringförmige Distanzelement (5, 9) durch Kunststoffumspritzung (14) hergestellt sind.

6. Antrieb nach einem der Ansprüche 1 bis 5, **dadurch gekennzeichnet, dass** die Verbindungselemente (4, 5, 9) durch axiale Endkappen (13) ausgebildet sind, und/oder
dass das Getriebe ein einstufiges oder ein mehrstufiges Planetengetriebe (17) ist, vorzugsweise
dass der innere Rotor (1) an einer Sonne (19) des Planetengetriebes (17) fixiert ist.

7. Antrieb nach einem der Ansprüche 1 bis 6, **dadurch gekennzeichnet, dass** das Getriebe ein Übersetzungsverhältnis von 5 bis 13, beispielsweise von 6 bis 12, insbesondere von 8 bis 10, vorzugsweise von 9, aufweist.

8. Antrieb nach Anspruch 6 oder 7, **dadurch gekennzeichnet, dass** ein äußerer Ring des Planetengetriebes (17) oder ein Planetenträger (22) mit der stillstehenden Motorachse verbunden ist, also nicht rotiert.

9. Antrieb nach einem der Ansprüche 1 bis 8, **dadurch gekennzeichnet, dass** die Permanentmagneten (3) seltene Erden, insbesondere NdFeB oder SmCo, aufweisen und/oder als kunststoffgebundene Magnete, AlNiCo, ausgebildet sind und/oder als Ferritmagneten ausgebildet sind.

10. Antrieb nach einem der Ansprüche 1 bis 9 **dadurch gekennzeichnet, dass** die Permanentmagnete (3) eine Remanenz geringer als 1,6 Tesla (NdFeB), insbesondere geringer als 1,0 Tesla, vorzugsweise geringer als 0,5 Tesla (Ferrit), aufweisen.

11. Antrieb nach einem der Ansprüche 1 bis 10, **dadurch gekennzeichnet, dass** die Permanentmagnete (3) in axialer Richtung des inneren Rotors (1) länger als die Polelemente (2) sind, sodass die Permanentmagnete (3) an einem oder an beiden axialen Enden des inneren Rotors (1) über die Polelemente (2) hinausragen.

12. Antrieb nach einem der Ansprüche 1 bis 11, **dadurch gekennzeichnet, dass** die Permanentmagnete (3) in innerer radialer Richtung länger als die Polelemente (2) sind, sodass die Permanentmagnete (3) am inneren radialen Ende (7) über die Polelemente (2) hinausragen.

13. Antrieb nach einem der Ansprüche 1 bis 12, **dadurch gekennzeichnet, dass** eine Freilaufeinheit, insbesondere an dem Rotor (1), angeordnet ist.

14. Antrieb nach einem der Ansprüche 1 bis 13, **dadurch gekennzeichnet, dass** keine Freilaufeinrichtung angeordnet ist, so dass regeneratives Bremsen ermöglicht ist.

15. Leichtes Elektrofahrzeug, insbesondere ein eBike, umfassend einen Antrieb nach einem der Ansprüche 1 bis 14.
